# EUROPEAN PATENT APPLICATION

(11) **EP 4 644 054 A1**
(43) Date of publication of application: **05.11.2025**
(21) Application number: 23910196.7
(22) Date of filing: 14.12.2023
(51) Int. Cl.: B25J 9/16

(54) **CONTROL CIRCUIT OF MECHANICAL ARM, MECHANICAL ARM, AND ROBOT**

(30) Priority: 28.12.2022 CN 202211693630
(71) Applicant: Guangdong Midea Electric Co., Ltd., Foshan, Guangdong 528311 (CN); KUKA Robotics Guangdong Co., Ltd., Foshan, Guangdong 528311 (CN); Kuka Robotics Manufacturing China Co., Ltd., Xiaokunshan Town Shanghai 201616 (CN); Midea Group Co., Ltd., Foshan, Guangdong 528311 (CN)
(72) Inventor: DING, Chengrun, Foshan, Guangdong 528311 (CN); LI, Lerong, Foshan, Guangdong 528311 (CN); LIU, Dan, Foshan, Guangdong 528311 (CN); ZHU, Lei, Foshan, Guangdong 528311 (CN); WEN, Yuanming, Foshan, Guangdong 528311 (CN)
(74) Representative: Oelke, Jochen
(86) International application number: PCT/CN2023/138921
(87) International publication number: WO 2024/140266

(57) **Abstract**

The present application relates to the field of safety control of industrial robots, and a control circuit of a mechanical arm, a mechanical arm, and a robot are provided by some embodiments of the present application. The mechanical arm includes a control circuit and a driving mechanism connected to the control circuit. The control circuit and the driving mechanism are arranged on a joint of the mechanical arm. The control circuit includes: a first detection circuit, connected to the driving mechanism and configured to obtain first motion information of a high-speed end of the driving mechanism; a second detection circuit, connected to the driving mechanism and configured to obtain second motion information of a low-speed end of the driving mechanism, a driving control circuit, connected to the first detection circuit and the second detection circuit and configured to control the driving mechanism to operate based on the first motion information and the second motion information; and a safety monitoring circuit, connected to the driving control circuit and the second detection circuit, respectively, and configured to perform safety monitoring on a motion of the low-speed end based on the second motion information, such that abnormal information is fed back to the driving control circuit in response to the motion of the low-speed end is abnormally. The driving control circuit is configured to control the driving mechanism to decelerate or stop operating based on the abnormal information, so as to achieve safe control of the joint of the mechanical arm.

## Description

### TECHNICAL FIELD

The present disclosure relates to the field of safety control of industrial robots, and in particular to a control circuit of a mechanical arm, a mechanical arm, and a robot.

### BACKGROUND

With the advancement of industrial automation, the use of industrial robots is increasing. While improving operating efficiency, the safety function technology of the industrial robots has become a top priority in research and development design. Especially, a typical collaborative robot relies solely on a servo system for reading a speed and a position of an integrated joint. However, some existing designs of the servo system have high complexity, resulting in high production costs of the collaborative robot using the servo system which are difficult to lower. Meanwhile, some existing servo systems are unable to meet the safety architecture proposed according to safety standards of the collaborative robot.

### SUMMARY OF THE DISCLOSURE

The embodiments of the present disclosure at least provide a control circuit of a mechanical arm, a mechanical arm, and a robot.

In a first aspect, the embodiments of the present disclosure provide a control circuit of a mechanical arm. The mechanical arm includes a control circuit and a driving mechanism connected to the control circuit. The control circuit and the driving mechanism are arranged on a joint of the mechanical arm. The control circuit includes: a first detection circuit, connected to the driving mechanism and configured to obtain first motion information of a high-speed end of the driving mechanism; a second detection circuit, connected to the driving mechanism and configured to obtain second motion information of a low-speed end of the driving mechanism; a driving control circuit, connected to the first detection circuit and the second detection circuit, respectively, and configured to control the driving mechanism to operate based on the first motion information and the second motion information; and a safety monitoring circuit, connected to the driving control circuit and the second detection circuit, respectively, and configured to perform safety monitoring on a motion of the low-speed end based on the second motion information and feed back abnormal information to the driving control circuit in response to the motion of the low-speed end being abnormally, wherein the driving control circuit is configured to control the driving mechanism to decelerate or stop operating based on the abnormal information. Motion information comprises dynamic information and kinematic information.

In a second aspect, the embodiments of the present disclosure provide a mechanical arm. the mechanical arm includes the above-mentioned mechanical arm.

In a third aspect, the embodiments of the present disclosure provide a robot. The robot includes a body; a motor, arranged in the body and configured to drive the body to move; the above-mentioned mechanical arm, arranged on the body and configured to perform operation.

In the above-mentioned technical solutions, the control circuit and the drive mechanism connected to the control circuit are arranged on the joint of the mechanical arm, and the motion information of the drive mechanism is monitored by the control circuit, so as to control the driving mechanism to operate, decelerate or stop operating, thereby achieving safe control of the joint of the mechanical arm. At the same time, in some embodiments of the present disclosure, the control circuit includes the first detection circuit, the second detection circuit, the driving control circuit, and the safety monitoring circuit. The first motion information of the high-speed end of the drive mechanism and the second motion information of the low-speed end of the drive mechanism are obtained by the first detection circuit and the second detection circuit, the driving control of the drive mechanism is further achieved by the driving control circuit, and the safety monitoring of the driving mechanism may be achieved by the first detection circuit, the second detection circuit, and the safety monitoring circuit. In this way, the servo system may be decomposed and simplified, and the design difficulty and production cost may be reduced. In addition, motion information in the embodiments of the present disclosure includes dynamic information and kinematic information, which may be capable of comprehensively considering the dynamics information and the kinematic information of the joint of the mechanical arm, so as to achieve a safety monitoring function of the joint and improve a functional safety level of the industrial robot.

It should be understood that the above general description and the subsequent detailed description are only illustrative and explanatory, and not limiting the present disclosure.

### BRIEF DESCRIPTION OF THE DRAWINGS

The accompanying drawings here are incorporated into the specification and form a part of the specification. These drawings illustrate embodiments consistent with the present disclosure, and are configured together with the specification to illustrate the technical solution of the present disclosure.
FIG. 1 is a structural schematic view of a control circuit of a mechanical arm according to a first embodiment of the present disclosure.
FIG. 2 is a structural schematic view of a control circuit of a mechanical arm according to a second embodiment of the present disclosure.
FIG. 3 is a structural schematic view of a control circuit of a mechanical arm according to a third embodiment of the present disclosure.
FIG. 4 is a structural schematic view of a control circuit of a mechanical arm according to a fourth embodiment of the present disclosure.
FIG. 5 is a structural schematic view of a mechanical arm according to an embodiment of the present disclosure.
FIG. 6 is a structural schematic view of a robot according to an embodiment of the present disclosure.

### DETAILED DESCRIPTION

The technical solutions in some embodiments of the present disclosure may be clearly and completely described in conjunction with accompanying drawings in some embodiments of the present disclosure. It should be understood that the specific embodiments described herein are only for explaining the present disclosure and are not intended to limit the present disclosure. Furthermore, it should be noted that for facilitate the description, the accompanying drawings only show some parts related to the present disclosure rather than the entire structure. Based on the embodiments in the present disclosure, all other embodiments obtained by those of ordinary skill in the art without creative effort are within the scope of the present disclosure.

In addition, the terms "first" or "second" that refer to numbers or ordinal numbers in the present disclosure are only configured to describe purposes and cannot be understood as indicating or implying relative importance or implicit indicating the quantity of technical features indicated. Therefore, features limited to "first" and "second" may explicitly or implicitly include at least one of these features. In the description of the present disclosure, "multiple" or "a plurality of" means at least two, such as two, three, or more, unless otherwise expressly and qualified.

An industrial robot, especially a cooperative robot, is required to meet functional safety standards of the industrial robot. The functional safety standards of the industrial robot include, but are not limited to, safety requirements proposed according to the safety standard ISO 15066 of the cooperative robot and a safety architecture proposed according to the mechanical safety standard ISO 13849-1. A control circuit of a mechanical arm may be provided by the embodiments of the present disclosure. The control circuit is arranged on a joint of the mechanical arm. The control circuit simplifies a servo system by decomposing or disassembling an existing servo system, which may reduce the design difficulty and production cost, achieve the safe control of the joint of the mechanical arm, and meet the functional safety standards of the industrial robot. The functional safety standards of the industrial robot include but are not limited to the safety requirements proposed according to the safety standard ISO 15066 of the cooperative robot and the safety architecture proposed according to the mechanical safety standard ISO 13849-1.

In the embodiments of the present disclosure, motion information may include dynamic information and kinematic information, and may be capable of comprehensively considering the dynamics information and the kinematic information of a joint of a mechanical arm, so as to achieve a safety monitoring function of the joint and improve a functional safety level of the industrial robot.

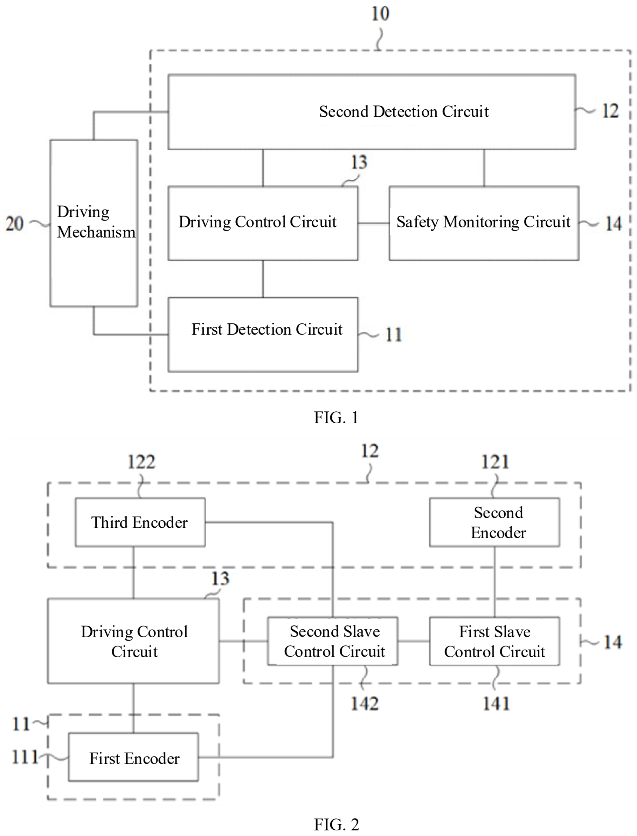

As shown in FIG. 1, FIG. 1 is a structural schematic view of a control circuit of a mechanical arm according to a first embodiment of the present disclosure. The mechanical arm includes a control circuit 10 and a driving mechanism 20 connected to the control circuit 10. The control circuit 10 and the driving mechanism 20 are arranged at the joints of the mechanical arm. In some embodiments, the driving mechanism 20 in the embodiments may be a motor. The driving mechanism 20 may be configured to drive the mechanical arm to move and/or rotate through the rotation of the motor.

In some embodiments, the control circuit 10 includes a first detection circuit 11, a second detection circuit 12, a driving control circuit 13, and a safety monitoring circuit 14. The first detection circuit 11 is connected to the driving mechanism 20 and configured to obtain first motion information of a high-speed end of the driving mechanism 20. The second detection circuit 12 is connected to the driving mechanism 20 and configured to obtain second motion information of a low-speed end of the driving mechanism 20. The first motion information of the high-speed end is proportional to the second motion information of the low-speed end. The high-speed end is a rotation shaft of the driving mechanism 20, such as an output shaft of a servo controller. The low-speed end is a motion shaft of the joint end of the mechanical arm. The low-speed end may be connected to the output shaft of the servo controller through a deceleration component.

In the embodiments, a motor and a reducer may be arranged in the joint of the mechanical arm. The motor is connected to the reducer, so as to control a motion and/or a rotation of the mechanical arm through an output shaft of the reducer. The high-speed end of the driving mechanism 20 is an input shaft of the motor, and the low-speed end of the driving mechanism 20 is the output shaft of the reducer, and the output shaft is connected to the motor. There is a certain proportional relationship between the input shaft of the motor and the output shaft of the reducer, such as N: 1, which may be understood as a case that the motor rotates N times or turns and an output shaft of the joint of the mechanical arm, i.e., the output shaft of the reducer, rotates one turn. At this time, a user may directly observe that the joint of the mechanical arm actually rotates one turn.

Since the first detection circuit 11 and the second detection circuit 12 may be encoders, the first detection circuit 11 may obtain the first motion information of the high-speed end of the driving mechanism 20 by sensing a rotation of a code wheel of the high-speed end of the input shaft of the motor. The second detection circuit 12 may obtain the second motion information of the low-speed end of the driving mechanism 20 by sensing a rotation of the output shaft of the joint of the mechanical arm, i.e., a rotation of a code wheel of the output shaft of the reducer.

As shown in FIG. 1, the driving control circuit 13 is connected to the first detection circuit 11 and the second detection circuit 12, respectively. The driving control circuit 13 is configured to control the driving mechanism 20 to operate based on the first motion information obtained by the first detection circuit 11 and the second motion information obtained by the second detection circuit 12.

In some embodiments, the driving control circuit 13 is configured to determine whether the first motion information and the second motion information meet a preset ratio, and determine whether the driving mechanism 20 operates abnormally. When the driving control circuit 13 determines the driving mechanism 20 to be abnormal, the driving control circuit 13 controls the drive mechanism 20 to decelerate or stop operating, that is, the drive mechanism 20 is stopped. In some embodiments, when the driving control circuit 13 determines that the driving mechanism 20 operates at an overspeed, it is necessary to control the driving mechanism 20 to decelerate to a safe rotation speed. When the driving control circuit 13 determines that the drive mechanism 20 is misaligned or has other abnormalities, it is necessary to control the drive mechanism 20 to immediately stop operating.

As shown in FIG. 1, the safety monitoring circuit 14 is connected to the driving control circuit 13 and the second detection circuit 12, respectively. The safety monitoring circuit 14 is configured to perform safety monitoring on the motion of the low-speed end based on the second motion information. In this way, when the motion of the low-speed end of the driving mechanism 20 is abnormally, the safety monitoring circuit 14 feeds back abnormal information to the driving control circuit 13, and the driving control circuit 13 is configured to control the driving mechanism 20 to decelerate or stop operating based on the abnormal information, that is, the drive mechanism 20 is stopped.

In the embodiments, the encoder applied in each of the first detection circuit 11 and the second detection circuit 12 includes two output modes, i.e., an incremental output and an absolute output. That is, each of corresponding first motion information and corresponding second motion information includes incremental position information and absolute position information.

In some embodiments, the safety monitoring circuit 14 is configured to obtain a first rotation speed or a first position of the low-speed end based on the incremental position information of the second motion information, and obtain a second rotation speed or a second position of the low-speed end based on the absolute position information of the second motion information.

The safety monitoring circuit 14 is configured to determine whether a difference between the first rotation speed and the second rotation speed is greater than a first difference threshold. When the safety monitoring circuit 14 determines that the difference between the first rotation speed and the second rotation speed is greater than the first difference threshold, the safety monitoring circuit 14 determines a rotation speed of the low-speed end of the driving mechanism 20 to be abnormal. The safety monitoring circuit 14 is further configured to determine whether a difference between the first position and the second position is greater than a second difference threshold. When the safety monitoring circuit 14 determines that the difference between the first position and the second position is greater than the second difference threshold, the safety monitoring circuit 14 determines a position of the low-speed end of the driving mechanism 20 to be abnormal.

In some embodiments, the driving control circuit 13 and the safety monitoring circuit 14 may be Microcontroller Units (MCUs). In the embodiments, the existing servo system of the collaborative robot is decomposed/disassembled into the driving control circuit 13 configured to perform driving control on the driving mechanism 20 and the safety monitoring circuit 14 configured to perform safety monitoring on the driving mechanism 20, such that the servo system may be simplified and design difficulty may be reduced. Meanwhile, a high-performance MCU may be utilized by the driving control circuit 13. Since a safety detection only needs to be responsible for a corresponding safety logic judgment, the safety monitoring circuit 14 may utilize a MCU with a lower performance, so as to reduce production costs.

As shown in FIGS. 1-2, FIG. 2 is a structural schematic view of a control circuit of a mechanical arm according to a second embodiment of the present disclosure. The safety monitoring circuit 14 includes a first slave control circuit 141 and a second slave control circuit 142. In the embodiments, the second motion information includes first speed position information and second speed position information.

In some embodiments, the first slave control circuit 141 is connected to the second detection circuit 12. The first slave control circuit 141 is configured to obtain the first speed position information from the second detection circuit 12 and process the first speed position information. The first control circuit 141 may perform corresponding classification transformation and/or filtering processing on the first speed position information, such that the first position information and the first speed information of the low-speed end after removing the influence of clutter may be obtained.

The second slave control circuit 142 is connected to the driving control circuit 13, the second detection circuit 12, and the first slave control circuit 141, respectively. The second slave control circuit 142 is configured to obtain the second speed position information from the second detection circuit 12, process the second speed position information, perform cross validation on processed second speed position information and processed first speed position information. In this way, the second slave control circuit 142 may determine whether the rotation speed and the position of the low-speed end are safe, feed back the abnormal information to the driving control circuit 13 when the rotation speed and/or the position are unsafe, and perform safe monitoring on the motion of the low-speed end. The second slave control circuit 142 may perform corresponding classification transformation and/or filtering processing on the second speed position information, the second position information and the second speed information of the low-speed end after removing the influence of clutter may be obtained. In addition, cross validation may be performed on the first position information processed by the first slave control circuit 141 and the second position information, and cross validation may be performed on the first speed information processed by the first slave control circuit 141 and the second speed information.

In some embodiments, the first slave control circuit 141 may further obtain processed second speed position information from the second slave control circuit 142, perform cross validation on the processed second speed position information and the processed first speed position information, and determine whether the rotation speed and the position of the low-speed end are safe. Alternatively, the first slave control circuit 141 may further obtain a cross-validation result of the second slave control circuit 142, and further perform second cross validation based on the cross-validation result of the first slave control circuit 141, so as to improve the accuracy of the detection.

In some embodiments, the first slave control circuit 141 and the second slave control circuit 142 may be the MCUs, and configured to obtain the first speed position information and the second speed position information from the second detection circuit 12, respectively. At the same time, since the second detection circuit 12 may be an encoder, the second detection circuit 12 may include two output modes, i.e., an incremental output and an absolute output. That is, each of first motion information and second motion information includes incremental position information and absolute position information.

According to the first embodiment, it may be seen that the first motion information further includes incremental position information and absolute position information. In the embodiments, the incremental position information of the first motion information is defined as the first incremental position information, and the incremental position information of the first speed position information is defined as the second incremental position information, and the incremental position information of the second speed position information is defined as the third incremental position information. The absolute position information of the second speed position information is defined as the first absolute position information, the absolute position information of the first speed position information is defined as the second absolute position information, and the absolute position information of the first motion information is defined as the third absolute position information.

The incremental position information includes rotation speed information, and the absolute position information includes position information. The first motion information corresponds to rotation speed information and/or position information of the high-speed end, and the second motion information corresponds to rotation speed information and/or position information of the low-speed end, that is, each of the first speed position information and the second speed position information correspond to the rotation speed information and/or the position information of the low-speed end.

In some embodiments, an incremental encoder is configured to convert a displacement into a periodic electrical signal, and then the electrical signal is converted into a counting pulse. The number of pulses is configured to represent a magnitude of the displacement. When a rotary shaft of the incremental encoder rotates, a corresponding pulse is output, and the discrimination of a rotation direction and the increase or decrease of the number of pulses are achieved through a rear directional circuit and a counter. A counting starting point of the incremental encoder may be arbitrarily set, so as to achieve infinite accumulation and measurement of multiple circles. An Z signal that transmits one pulse per revolution may be served as a reference mechanical zero position. As the encoder rotates once, a fixed pulse may be output, and the number of pluses is determined by the number of lines of a grating of the encoder.

An absolute encoder is a sensor that directly outputs digits. On its circular code wheel, several concentric code wheels are arranged on a circular code wheel of the absolute encoder along a radial direction. Each channel includes a transparent sector area and an opaque sector area. There is a double relationship between trees disposed on adjacent two code channels, and the number of code channels on the code wheel is the number of bits of binary digits of the code wheel. A light source is arranged on a side of the code wheel, and a photosensitive component corresponding to each code channel is arranged on the other side of the code wheel. When the code wheel is disposed on different positions, each photosensitive component converts a corresponding level signal based on whether it is illuminated or not, and a binary number is formed.

Comparing the incremental encoder with the absolute encoder, it can be seen that the incremental encoder defines gaps with equal angel (divided into a transparent part and an opaque part) on an edge of the code wheel, and the light source and the photosensitive component are arranged on two sides of the encoder. When the encoder rotates with a working shaft, the light and shadow may change as one groove is rotated every time. After shaping and amplification, an electrical pulse output signal with a certain amplitude and power may be obtained, and the number of pulses is equal to the number of grooves rotated. The pulse signal is transmitted to the counter to count, and a measured number may determine a rotation angle of the wheel. With respect to the absolute encoder, the absolute encoder does not require a counter, and a fixed numerical code corresponding to a position may be read at any position of the shaft. That is, each position of the absolute encoder is absolutely unique, anti-interference, and does not require power failure memory.

In some embodiments, as shown in FIG. 2, the first detection circuit 11 includes a first encoder 111 arranged opposite to the high-speed end of the driving mechanism 20. In some embodiments, the first encoder 111 may be arranged opposite to an edge of the high-speed end. When the high-speed end rotates for one cycle, a calibration position and/or a calibration component arranged on the high-speed end pass through the first encoder 111 once. The first encoder 111 may determine the rotation speed and/or the position of the high-speed end by obtaining the number of times the calibration position and/or the calibration component passing through. In addition, the first encoder 111 is connected to the driving control circuit 13 and configured to obtain the first motion information, and the first encoder 111 may output the first incremental position information and/or the third absolute position information.

The second detection circuit 12 includes a second encoder 121 and a third encoder 122. The second encoder 121 is arranged opposite to the low-speed end of the driving mechanism 20. In some embodiments, the second encoder 121 may be arranged opposite to an edge of the low-speed end. When the low-speed end rotates for one cycle, a calibration position and/or a calibration component arranged on the low-speed end pass through the second encoder 121 once. The second encoder 121 may determine the rotation speed and/or the position of the high-speed end by obtaining the number of times the calibration position and/or the calibration component pass through. In addition, the second encoder 121 is connected to the first slave control circuit 141 and configured to obtain the first speed position information, and the second encoder 121 may output the second incremental position information and/or the second absolute position information. The third encoder 122 is arranged opposite to the low-speed end of the driving mechanism 20 and is connected to the second slave control circuit 142. The third encoder 122 is configured to obtain the second speed position information, and may output the third incremental position information and/or the first absolute position information.

In some embodiments, the driving control circuit 13 is configured to obtain the rotation speed of the high-speed end based on the first incremental position information. In addition, since an output end of the high-speed end is connected to an input end of the low-speed end through the reducer, the driving control circuit 13 controls the rotation of the high-speed end based on the rotation speed to control the rotation of the low-speed end.

In some embodiments, the driving control circuit 13 is configured to obtain a current position of the low-speed end of the driving mechanism 20 based on the first absolute position information, and control the joint to reach a target position based on the rotation speed and a current position of the high-speed end of the driving mechanism 20. In some embodiments, based on the current position of the low-speed end obtained from the first absolute position information and the rotation speed of the high-speed end obtained from the first incremental position information, the driving control circuit 13 is configured to control the driving mechanism 20 to operate. In some embodiments, the driving mechanism 20 may be controlled to drive the joint of the mechanical arm to rotate and/or move, such that the joint may be driven to reach the target position.

In some embodiments, the first slave control circuit 141 may be capable of determining a first rotation speed and/or a first position of the low-speed end based on the first speed position information. At the same time, the second slave control circuit 142 may be capable of determining a second rotation speed and/or a second position of the low-speed end based on the second speed position information.

The first slave control circuit 141 is configured to determine the first rotation speed of the low-speed end based on the second incremental position information, and the second slave control circuit 142 is configured to determine the second rotation speed of the low-speed end based on the third incremental position information; and/or the first slave control circuit 141 is configured to determine the first position of the low-speed end based on the second absolute position information, and the second slave control circuit 142 is configured to determine the second position of the low-speed end based on the first absolute position information.

In some embodiments, since the second slave control circuit 142 is connected to the first slave control circuit 141, the second slave control circuit 142 may be further capable of obtaining the first rotation speed and/or the first position fed back by the first slave control circuit 141.

In an embodiment, the second slave control circuit 142 is configured to determine whether a difference between the first rotation speed and the second rotation speed is greater than a first difference threshold. When the second slave control circuit 142 determines that the difference between the first rotation speed and the second rotation speed is greater than the first difference threshold, the second slave control circuit 142 determines the rotation speed of the low-speed end of the driving mechanism 20 to be abnormal, and feeds back abnormal rotation speed information to the driving control circuit 13, and the driving control circuit 13 controls the drive mechanism 20 to stop operating based on the abnormal rotation speed information.

In another embodiment, the second slave control circuit 142 may further be configured to determine whether the first rotation speed is greater than a rotation speed threshold. If the second slave control circuit 142 determines that the first rotation speed is greater than the rotation speed threshold, the second slave control circuit 142 determines the motion of the low-speed end of the driving mechanism 20 to be overspeed, and feeds back overspeed information, and the driving control circuit 13 controls the driving mechanism 20 to decelerate based on the overspeed information.

In some embodiments, the first difference threshold and the rotation speed threshold may be parameters designed by the user based on experience, and may be designed based on information such as a model, a performance parameter, or a size of the mechanical arm. At the same time, the second slave control circuit 142 may simultaneously execute all the methods for determining abnormality described in the above embodiments, or select one of the methods to execute, which is not limited herein.

In some embodiments, as shown in FIG. 2, the second slave control circuit 142 is further connected to the first detection circuit 11, and the second slave control circuit 142 may determine the rotation speed of the high-speed end of the driving mechanism 20 according to or by using the first incremental position information obtained by the first detection circuit 11, so as to determine the rotation speed of the low-speed end of the driving mechanism 20.

The second control circuit 142 determines the rotation speed of the low-speed end based on the first incremental position information fed back by the first detection circuit 11 and a reduction ratio. The reduction ratio is a ratio of the high-speed end of the driving mechanism 20 to the low-speed end of the driving mechanism 20. In some embodiments, the second control circuit 142 obtains the rotation speed of the high-speed end based on the first incremental position information. The reduction ratio of the high-speed end of the driving mechanism 20 to the low-speed end of the driving mechanism 20 may be referred as the ratio of the input shaft of the motor to the output shaft of the reducer, and may be designed according to the model, the performance parameter, or the size of the mechanical arm. Therefore, the reduction ratio of the high-speed end of the driving mechanism 20 to the low-speed end of the driving mechanism 20 is the preset ratio described in the embodiments of the present disclosure.

In some embodiments, as shown in FIG. 2, the second slave control circuit 142 is further connected to the first detection circuit 11, and the second slave control circuit 142 may determine the position of the high-speed end of the driving mechanism 20 according to or by using the third absolute position information obtained by the first detection circuit 11, so as to determine the rotation speed of the low-speed end of the driving mechanism 20.

The second control circuit 142 determines the rotation speed of the low-speed end based on the third absolute position information fed back by the first detection circuit 11 and the reduction ratio. The reduction ratio is a ratio of the high-speed end of the driving mechanism 20 to the low-speed end of the driving mechanism 20. In some embodiments, the second slave control circuit 142 obtains the position of the high-speed end based on the third absolute position information. Since there is a certain ratio between the rotation speed information and the position information, and the ratio is related to a performance parameter of the code wheel of the high-speed end of the driving mechanism 20, that is, the second slave control circuit 142 may be capable of calculating the rotation speed of the high-speed end according to the position of the high-speed end. At the same time, the reduction ratio of the high-speed end of the driving mechanism 20 to the low-speed end of the driving mechanism 20 may be one between the input shaft of the motor to the output shaft of the reducer. The ratio may be designed based on the model, the performance parameter, or the size of the mechanical arm, and the controlling circuit 142 may determine the rotation speed of the low-speed end based on the ratio and the rotation speed of the high-speed end. Therefore, the reduction ratio of the high-speed end of the driving mechanism 20 to the low-speed end of the driving mechanism 20 is the preset ratio described in the embodiments of the present disclosure.

In some embodiments, the first slave control circuit 141 may also determine the rotation speed of the low-speed end based on the second absolute position information. The first slave control circuit 141 obtains the position of the low-speed end based on the second absolute position information. Since there is a certain ratio between the rotation speed information and the position information, and the ratio is related to a performance parameter of the code wheel of the low-speed end of the driving mechanism 20, that is, the first slave control circuit 141 may be capable of calculating the rotation speed of the low-speed end according to the position of the low-speed end.

In some embodiments, the second slave control circuit 142 and the first slave control circuit 141 determine the rotation speed of the low-speed end according to any one of the above-mentioned methods, and further compare the rotation speed of the low-speed end obtained by the second slave control circuit 142 with the rotation speed of the low-speed end obtained by the first slave control circuit 141, and a corresponding verification result may be obtained. In addition, when the second slave control circuit 142 or the first slave control circuit 141 determines the rotation speed to be unsafe, that is, when the second slave control circuit 142 or the first slave control circuit 141 determines the rotation speed to be overspeed or to be under speed, the second slave control circuit 142 or the first slave control circuit 141 feeds back the abnormal information to the driving control circuit 13.

In other embodiments, when the code wheel of the high-speed of the driving mechanism 20 or the code wheel of the low-speed end of the driving mechanism 20 becomes dirty or fails, the ration speed may correspondingly change. At this time, the reduction ratio of the high-speed end of the current driving mechanism 20 to the low-speed end of the driving mechanism 20 may be compared with a preset reduction ratio. When the reduction ratio matches the preset reduction ratio, it may be proven that the code wheel of the high-speed of the driving mechanism 20 and the code wheel of the low-speed end of the driving mechanism 20 are normal and error-free. When the reduction ratio fails to match the preset reduction ratio, it may be proven that there is an error in the code wheel of the high-speed of the driving mechanism 20 or the code wheel of the low-speed end of the driving mechanism 20, and the abnormal information is fed back to the driving control circuit 13, thereby enabling the control circuit 10 to enter a safe controlling state.

In an embodiment, the second slave control circuit 142 is configured to determine whether the difference between the first position and the second position is greater than the second difference threshold. When the second slave control circuit 142 determines that the difference between the first position and the second position is greater than the second difference threshold, the second slave control circuit 142 determines the position of the low-speed end of the driving mechanism 20 to be abnormal, and feeds back the abnormal position information, and the driving control circuit 13 controls the drive mechanism 20 to stop operating based on the abnormal position information.

If the second control circuit 142 determines that the difference between the first position and the second position is less than or equal to the second difference threshold, the second control circuit 142 is further configured to determine whether the first position is greater than a position threshold. When the second control circuit 142 determines the first position to be greater than the position threshold, the second control circuit 142 determines the position of the low-speed end of the driving mechanism 20 to be overrun, and feeds back position overrunning information, and the driving control circuit 13 controls the driving mechanism 20 to stop operating based on the position overrunning information.

In some embodiments, the second difference threshold and the position threshold may be parameters designed by the user based on experience, and may be designed based on information such as the model, the performance parameter, or the size of the mechanical arm. At the same time, the second slave control circuit 142 may simultaneously execute all the methods for determining abnormality described in the above embodiments, or select one of the methods to execute, which is not limited herein.

In some embodiments, as shown in FIG. 2, the second slave control circuit 142 is further connected to the first detection circuit 11, and the second slave control circuit 142 may determine the rotation speed of the high-speed end of the driving mechanism 20 according to or by using the first incremental position information obtained by the first detection circuit 11, so as to determine the position of the low-speed end of the driving mechanism 20.

The second control circuit 142 determines the rotation speed of the low-speed end based on the first incremental position information fed back by the first detection circuit 11 and the reduction ratio. The reduction ratio is a ratio of the high-speed end of the driving mechanism 20 to the low-speed end of the driving mechanism 20, and the position of the low-speed end may be further calculated according to the ratio of the rotation speed information to the position information. Since the reduction ratio of the high-speed end of the driving mechanism 20 to the low-speed end of the driving mechanism 20 may be referred as the ratio of the input shaft of the motor to the output shaft of the reducer, the ratio may be designed based on the model, the performance parameter, or the size of the mechanical arm, and the controlling circuit 142 may determine the rotation speed of the low-speed end based on the ratio and the rotation speed of the high-speed end. At the same time, there is a certain ratio between the rotation speed information and the position information, and the ratio is related to a performance parameter of the code wheel of the low-speed end encoder of the driving mechanism 20, that is, the second control circuit 142 may be capable of calculating the position of the low-speed end according to the rotation speed of the low-speed end. Therefore, the reduction ratio of the high-speed end of the driving mechanism 20 to the low-speed end of the driving mechanism 20 is the preset ratio described in the embodiments of the present disclosure.

In some embodiments, as shown in FIG. 2, the second slave control circuit 142 is further connected to the first detection circuit 11, and the second slave control circuit 142 may determine the position of the high-speed end according to or by using the third absolute position information obtained by the first detection circuit 11, so as to determine the position of the low-speed end of the driving mechanism 20.

The second control circuit 142 is configured to obtain the position of the high-speed end based on the third absolute position information fed back by the first detection circuit 11, and further calculate the rotation speed of the high-speed end according to the ratio of the rotation speed information to the position information. In addition, the second control circuit 142 is configured to determine the rotation speed of the low-speed end based on the reduction ratio of the high-speed end of the driving mechanism 20 to the low-speed end of the driving mechanism 20 and the rotation speed of the high-speed end. Furthermore, the second control circuit 142 is configured to calculate the position of the low-speed end according to the ratio of the rotation speed information to the position information. Therefore, the reduction ratio of the high-speed end of the driving mechanism 20 to the low-speed end of the driving mechanism 20 is the preset ratio described in the embodiments of the present disclosure.

In some embodiments, the driving control circuit 13 is configured to determine an initial position of the high-speed end based on the third absolute position information at startup time, and determine the position of the high-speed end after startup based on the initial position and the corresponding first incremental position information after startup. In some embodiments, the driving control circuit 13 may be capable of determining the initial position of the high-speed end based on the third absolute position information at the startup time, and determine the rotation speed of the high-speed end of the drive mechanism 20 under a normal operation state based on the corresponding first incremental position information after startup. Since there is a certain ratio between the rotation speed information and the position information, the ratio is related to the performance parameter of the code wheel of the high-speed end of the driving mechanism 20, the driving control circuit 13 may be capable of determining the position of the high-speed end after startup based on the initial position and the rotation speed of the high-speed end. At the same time, the second slave control circuit 142 communicates with the driving control circuit 13, so as to obtain a real-time position of the high-speed end fed back by the driving control circuit 13.

In some embodiments, the first slave control circuit 141 may be further configured to determine the position of the low-speed end based on the second incremental position information. The first slave control circuit 141 is configured to obtain the rotation speed of the low-speed end based on the second incremental position information. Since there is a certain ratio between the rotation speed information and position information, the ratio is related to the performance parameter of the code wheel of the low-speed end of the driving mechanism 20, the first slave control circuit 141 may be capable of calculating the position of the low-speed end according to the rotation speed of the low-speed end.

In some embodiments, the second slave control circuit 142 and the first slave control circuit 141 determine the position of the low-speed end according to any one of the above methods, and further compare the position of the low-speed end obtained by the second slave control circuit 142 with the position of the low-speed end obtained by the first slave control circuit 141, and a corresponding verification result may be obtained. In addition, when the second slave control circuit 142 or the first slave control circuit 141 determines the position of the low-speed end to be unsafe, that is, when the second slave control circuit 142 or the first slave control circuit 141 determines the position of the low-speed end to be overrun, the second slave control circuit 142 or the first slave control circuit 141 feeds back the abnormal information to the driving control circuit 13.

In the embodiments, the first encoder 111 is arranged correspondingly to the high-speed end of the drive mechanism 20, and the rotation speed information and/or the position information of the high-speed end are determined by the first encoder 111. The second encoder 121 and the third encoder 122 are arranged correspondingly to the low-speed end of the drive mechanism 20, and the rotation speed information and/or the position information of the low-speed end are determined by the second encoder 121 and the third encoder 122. In addition, the rotation speed and/or the position information of the low-speed end is obtained by the first slave control circuit 141 through the second encoder 121, and the rotation speed and/or the position information of the low-speed end is determined by the second slave control circuit 141 through the third encoder 122. Further, the cross validation may be performed on the rotation speed and/or the position information obtained by the first slave control circuit 141 and the second slave control circuit 141, so as to achieve redundant safety monitoring, and thus it may be possible to prevent serious consequences caused by various errors, thereby reducing the failure rate of the control circuit 10 and improving the reliability of the joint. Therefore, it may enable the mechanical arm utilizing the control circuit 10 to meet the functional safety standards of the industrial robot. The functional safety standards for the industrial robot include, but are not limited to, the safety requirements proposed according to the safety standard ISO 15066 of the cooperative robot and the safety architecture proposed according to the mechanical safety standard ISO 13849-1. In some embodiments, the safety functions of the mechanical arm utilizing the control circuit 10 need to meet Category 3 and Performance Level d.

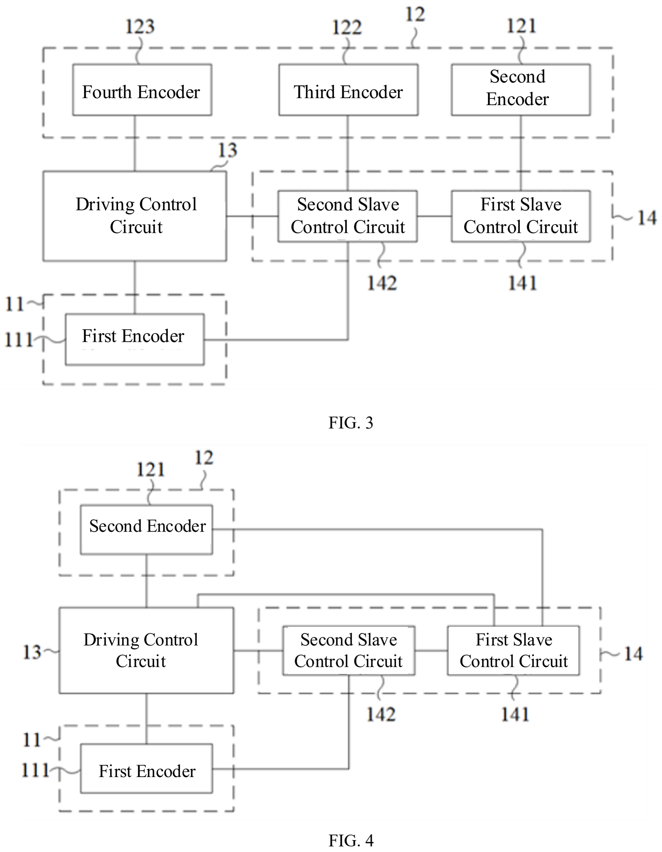

As shown in FIG. 1 and FIG. 3, FIG. 3 is a structural schematic view of a control circuit of a mechanical arm according to a third embodiment of the present disclosure. In the embodiments, the first detection circuit 11 includes the first encoder 111, and the second detection circuit 12 includes the second encoder 121, the third encoder 122, and a fourth encoder 123.

The first encoder 111 is disposed opposite to the high-speed end of the driving mechanism 20 and connected to the driving control circuit 13. The first encoder 111 is configured to obtain the first motion information and may output the third absolute position information and the first incremental position information. The second encoder 121 is arranged opposite to the low-speed end of the driving mechanism 20 and connected to the first slave control circuit 141. The second encoder 121 is configured to obtain the first speed position information and may output the second absolute position information. The third encoder 122 is arranged opposite to the low-speed end of the driving mechanism 20 and connected to the second slave control circuit 142. The third encoder 122 is configured to obtain the second speed position information and may output the first absolute position information.

The fourth encoder 123 is arranged opposite to the low-speed end of the driving mechanism 20 and connected to the driving control circuit 13. The fourth encoder 123 is configured to obtain the position information of the third speed. The third speed position information is configured to characterize/represent the position information of the low-speed end, that is, the third speed position information includes the fourth absolute position information.

The safety monitoring circuit 14 includes the first slave control circuit 141 and the second slave control circuit 142. The first slave control circuit 141 is connected to the second encoder 121, and the first slave control circuit 141 is configured to obtain the second absolute position information through the second encoder 121 and process the second absolute position information.

The second slave control circuit 142 is connected to the third encoder 122 and the first slave control circuit 141, respectively. The second slave control circuit 142 is configured to process the first absolute position information and perform cross validation on the processed first absolute position information and the processed second absolute position information, determine whether the rotation speed and the position of the low-speed end are safe, and feed back the abnormal information to the driving control circuit 13 when the rotation speed and/or the position of the low-speed end are unsafe.

The driving control circuit 13 is configured to control the driving mechanism 20 to operate based on the fourth absolute position information and the third absolute position information. The second slave control circuit 142 is configured to perform cross validation on the first absolute position information and the second absolute position information, obtain a corresponding validation result, and feed back the abnormal information to the driving control circuit 13 when the rotation speed and/or the position are unsafe.

The second control circuit 142 may directly determine the position of the low-speed end according to the first absolute position information, and the rotation speed of the low-speed end may further be calculated according to the ratio of the rotation speed information to the position information. Similarly, the first slave control circuit 141 may directly determine the position of the low-speed end according to the second absolute position information, and the rotation speed of the low-speed end may further be calculated according to the ratio of the rotation speed information to the position information.

In some embodiments, the second slave control circuit 142 is further connected to the driving control circuit 13 and configured to obtain the first incremental position information. In addition, the second slave control circuit 142 is configured to perform cross validation based on the first incremental position information and the second absolute position information, obtain the corresponding validation result, and feed back the abnormal information to the driving control circuit 13 when the rotation speed and/or the position are unsafe.

In some embodiments, the second control circuit 142 is configured to obtain the rotation speed of the high-speed end according to the first incremental position information, and further calculate the rotation speed of the low-speed end based on the reduction ratio of the high-speed end of the driving mechanism 20 to the low-speed end of the driving mechanism 20, namely, the ratio of the input shaft of the motor to the output shaft of the reducer. The second control circuit 142 may compare the rotation speed of the low-speed end calculated based on the position of the low-speed determined by the second absolute position with the rotation speed of the low-speed end calculated based on the first incremental position information, such that the second control circuit 142may verify whether the rotation speed of the low-speed end is safe, and feed back the abnormal information to driving control circuit 13 when the rotation speed of the low-speed end is unsafe, that is, when the second control circuit 142 determines the rotation speed of the low-speed end to be overspeed or under speed.

Furthermore, the second slave control circuit 142 may convert, based on the ratio of the rotation speed information to the position information, the rotation speed of the low-speed end calculated according to the first incremental position information into the position of the low-speed end. In addition, the position of the low-speed end converted from the rotation speed of the low-speed end is compared with the position of the low-speed end directly determined according to the second absolute position information, such that the second slave control circuit 142 may verify whether the position of the low-speed end is safe, and feed back the abnormal information to driving control circuit 13 when the position of the low-speed end is unsafe, that is, when the second slave control circuit 142 determines the position of the low-speed end to be overrun.

In the embodiments, the first encoder 111, the second encoder 121, the third encoder 122, and the fourth encoder 123 are utilized to obtain the position information and/or the rotation speed information of each of the high-speed end and the low-speed end of the driving mechanism 20, such that it may enable the driving control circuit 13 to perform the driving control on the driving mechanism 20, and enable the first slave control circuit 141 and the second slave control circuit 142 to perform the safety monitoring on the driving mechanism 20. In the embodiments, different position information and/or rotation speed information may be obtained through multiple encoders, such that it may prevent an inability to directly obtain corresponding position information and/or rotation speed information when any one of the encoders is damaged, thereby improving detection accuracy and enhancing reliability of the joint, and thus it may enable the robot utilizing the control circuit 10 to meet the functional safety standards of the industrial robot. The functional safety standards for the industrial robot include, but are not limited to, the safety requirements proposed according to the safety standard ISO 15066 of the cooperative robot and the safety architecture proposed according to the mechanical safety standard ISO 13849-1.

As shown in FIG. 1 and FIG. 4, FIG. 4 is a structural schematic view of a control circuit of a mechanical arm according to a fourth embodiment of the present disclosure. As shown in FIG. 4, in the embodiments, the first detection circuit 11 includes the first encoder 111, and the second detection circuit 12 includes the second encoder 121.

The first encoder 111 is disposed opposite to the high-speed end of the driving mechanism 20 and connected to the driving control circuit 13. The first encoder 111 is configured to obtain the first motion information, and may output the first incremental position information and the third absolute position information. The second encoder 121 is disposed opposite to the low-speed end of the driving mechanism 20 and connected to the driving control circuit 13. The second encoder 121 is configured to obtain the first speed position information and may output the second incremental position information and the second absolute position information.

The driving control circuit 13 is configured to control the rotation speed of the high-speed end based on the first motion information and the rotation speed of the high-speed end obtained according to the first motion information, so as to control the rotation speed of the low-speed end connected to the high-speed end. In some embodiments, the driving control circuit 13 is configured to obtain the rotation speed of the high-speed end based on the first incremental position information, and control whether to decelerate the high-speed end by determining whether the rotation speed of the high-speed end is abnormal, i.e., whether the rotation speed of the high-speed end is overspeed.

The driving control circuit 13 is configured to obtain the current position of the low-speed end based on the first speed position information, and control the joint to reach the target position based on the rotation speed and the current position of the low-speed end. In some embodiments, the driving control circuit 13 is configured to obtain the position of the low-speed end based on the second absolute position information, and calculate the rotation speed of the low-speed end according to the ratio of the rotation speed information to the position information. In this way, according to the current position and the rotation speed of the low-speed end, the driving control circuit 13 controls the joint of the mechanical arm to move and/or rotate and reach the target position.

In some embodiments, the safety monitoring circuit 14 includes the first slave control circuit 141 and the second slave control circuit 142.

The first slave control circuit 141 is connected to the second encoder 121, and configured to obtain and process the first speed position information.

The second slave control circuit 142 is connected to the driving control circuit 13, the first encoder 111, and the first slave control circuit 141, respectively. The second slave control circuit 142 is configured to process the first motion information, perform cross validation on the processed first motion information and the processed first speed position information, determine whether the rotation speed and the position of the low-speed end are safe, and feed back the abnormal information to the driving control circuit 13 when the rotation speed and/or the position of the low-speed end is unsafe.

In some embodiments, the second control circuit 142 is configured to determine the rotation speed of the low-speed end based on the second incremental position information, and further determine the rotation speed of the high-speed end based on the first incremental position information feedback from the first encoder 111. The rotation speed of the low-speed end is calculated according to the reduction ratio of the high-speed end of the driving mechanism 20 to the low-speed end of the driving mechanism 20. The obtained rotation speed of the low-speed end is compared with the calculated rotation speed of the low-speed end, such that the second control circuit 142 may verify whether the rotation speed of the low-speed end is safe, and feed back the abnormal information to the driving control circuit 13 when the rotation speed of the low-speed end is unsafe, that is, when the second control circuit 142 determines the rotation speed of the low-speed end to be overspeed or under speed.

Furthermore, the second slave control circuit 142 may convert the rotation speed of the low-speed end calculated according to the first incremental position information into the position of the low-speed end based on the ratio of the rotation speed information to the position information. The second slave control circuit 142 may further convert the rotation speed of the low-speed end calculated according to the second incremental position information into a position of another low-speed end. The position of the low-speed end is compared with the position of the another low-speed end, such that the second slave control circuit 142 may verify whether the position of the low-speed end is safe, and feed back the abnormal information to the driving control circuit 13 when the position of the low-speed end is unsafe, that is, when the second slave control circuit 142 determines the position of the low-speed end to be overrun.

As shown in FIG. 4, the first slave control circuit 141 is further connected to the driving control circuit 13, and configured to transmit the second incremental position information to the driving control circuit 13. The driving control circuit 13 is configured to compare the third absolute position information with the second incremental position information, and determine whether the first slave control circuit 141 is abnormal. When the driving control circuit 13 determines the first slave control circuit 141 to be abnormal, the driving control circuit 13 controls the drive mechanism to stop operating or report an error.

In some embodiments, the driving control circuit 13 is configured to determine the position of the high-speed end based on the third absolute position information, calculate the rotation speed of the high-speed end according to the ratio of the rotation speed information to the position information, and further calculate the rotation speed of the low-speed end according to the reduction ratio. The reduction ratio is a ratio of the high-speed end of the driving mechanism 20 to the low-speed end of the driving mechanism 20. At the same time, the driving control circuit 13 is configured to determine the rotation speed of the low-speed end based on the second incremental position information. The determined rotation speed of the low-speed end is compared with the calculated rotation speed of the low-speed end, such that the driving control circuit 13may verify whether the rotation speed of the low-speed end is safe, and feed back the abnormal information to the driving control circuit 13 when the rotation speed of the low-speed end is unsafe, that is, when the driving control circuit 13 determines the rotation speed of the low-speed end to be overspeed or under speed.

In the embodiments, by only utilizing the first encoder 111 and the second encoder 121, it may be possible to obtain the position information and/or the rotation speed information of each of the high-speed end and the low-speed end of the driving mechanism 20. In this way, it may be possible to enable the driving control circuit 13 to perform the driving control on the driving mechanism 20, and enable the first slave control circuit 141 and the second slave control circuit 142 to perform the safety monitoring on the driving mechanism 20, and there are advantages such as simple overall structure and low production cost.

In some embodiments, since the safety monitoring circuit 14 is only configured to perform monitoring and logic control on an input part of the joint of the mechanical arm, and joints of different mechanical arms need to meet different safety function requirements and applications, a specific design of the safety monitoring circuit 14 may be different. For example, in other embodiments, discrete logic devices or programmable logic devices, such as a Field Programmable Gate Array (FPGA), a Complex Programming Logic Device (CPLD), etc., may be used to replace the two MCUs of the first slave control circuit 141 and the second slave control circuit 142 in some embodiments of the present disclosure.

In some embodiments, a circuit realizing other protection functions, such as at least one of an over temperature protection circuit, an over current protection circuit, and an over voltage and under voltage protection circuit, may further be arranged on the safety monitoring circuit 14, so as to monitor working voltages and working temperature.

In the embodiments of the present disclosure, the control circuit 10 and the driving mechanism 20 are arranged on the joint of the mechanical arm, for example, the control circuit 10 and the driving mechanism 20 are generally arranged in the joint of the mechanical arm, and the motion information of the driving mechanism 20 may be monitored by the control circuit 10, so as to control the driving mechanism 20 to operate, decelerate or stop operating, thereby achieving safe control of the joint of the mechanical arm. In some embodiments, the control circuit 10 includes the driving control circuit 13, so as to perform the driving control on the driving mechanism 20, and the control circuit 10 further includes the safety monitoring circuit 14, so as to perform the safety monitoring on the driving mechanism 20.

On the one hand, the control circuit 10 is decomposed/disassembled into the driving control circuit 13 and the safety monitoring circuit 14, such that the servo system may be simplified and the design difficulty may be reduced. On the other hand, the high-performance MCU is utilized in the driving control circuit 13 with complex control logic, and the low-performance MCU is utilized in the safety monitoring circuit 14 with simple safety logic judgment, such that it may reduce production costs without affecting safety control performance.

In addition, the safety monitoring circuit 14 includes the first slave control circuit 141 and the second control circuit 142. The first slave control circuit 141 and the second control circuit 142 obtain the rotation speed and/or the position of the low-speed end of the driving mechanism 20, respectively. The first slave control circuit 141 and the second control circuit 142 are the MCUs. The cross validation may be performed on the rotation speed and/or the position information obtained by the first slave control circuit 141 and the second slave control circuit 141, so as to achieve the redundant safety monitoring, and thus it may be possible to prevent serious consequences caused by various errors, thereby reducing the failure rate of the control circuit 10 and improving the reliability of the joint. Therefore, it may enable the robot utilizing the control circuit 10 to meet the functional safety standards of the industrial robot. The functional safety standards for the industrial robot include, but are not limited to, the safety requirements proposed according to the safety standard ISO 15066 of the cooperative robot and the safety architecture proposed according to the mechanical safety standard ISO 13849-1.

On the other hand, a plurality of multi-encoder technical solutions, such as design solutions of double coding, three coding, and four coding, may be provided in the embodiments of the present disclosure, which may meet the corresponding safety monitoring of different servo mechanisms and have higher adaptability.

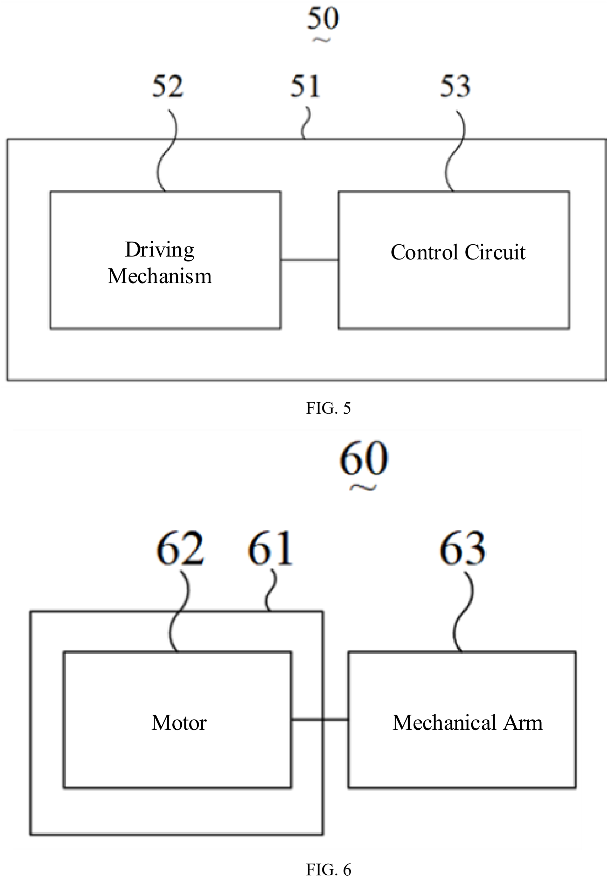

A mechanical arm may be further provided by some embodiments of the present disclosure. As shown in FIG. 5, FIG. 5 is a structural schematic view of a mechanical arm according to an embodiment of the present disclosure. A mechanical arm 50 includes a driving mechanism 52, a control circuit 53 and a joint 51. The driving mechanism 52 is the driving mechanism 20 according to any of the above-mentioned embodiments, and the control circuit 53 is the control circuit 10 according to any of the above-mentioned embodiments, which will not be repeated herein.

In some embodiments, the driving mechanism 52 and the control circuit 53 are arranged in the joint 51, and the driving mechanism 52 is configured to drive the joint 51 to move. The control circuit 53 is connected to the driving mechanism 52 and configured to control the driving mechanism 52 to operate. The safety monitoring circuit 14 is configured to perform safety monitoring on the motion of the low-speed end of the driving mechanism 52. In this way, when the motion of the low-speed end of the driving mechanism 52 is abnormally, the control circuit 53 is configured to feed back the abnormal information to the driving control circuit 13, and the driving control circuit 13 is configured to control the driving mechanism 52 to decelerate or stop operating based on the abnormal information.

In the mechanical arm 50 of the embodiments of the present disclosure, the control circuit 53 and the driving mechanism 52 are arranged in the joint 51 of the mechanical arm 50, and the motion information of the driving mechanism 52 may be monitored by the control circuit 53, so as to control the driving mechanism 52 to operate, decelerate, or stop operating, thereby achieving safe control of the joint of the mechanical arm. Therefore, it may enable the robot utilizing the control circuit 10 to meet the functional safety standards of the industrial robot. The functional safety standards for the industrial robot include, but are not limited to, the safety requirements proposed according to the safety standard ISO 15066 of the cooperative robot and the safety architecture proposed according to the mechanical safety standard ISO 13849-1.

A robot may be further provided by some embodiments of the present disclosure. As shown in FIG. 6, FIG. 6 is a structural schematic view of a robot according to an embodiment of the present disclosure. A robot 60 includes a body 61, a motor 62, and a mechanical arm 63. The mechanical arm 63 is the mechanical arm 50 according to any of the above-mentioned embodiments, which will not be repeated here.

In some embodiments, the motor 62 is arranged in the body 61 of the robot 60 and configured to drive the body 61 to move. The mechanical arm 63 is arranged on the body 61 and configured to perform operation.

In the embodiments of the present disclosure, the mechanical arm 63 of the robot 60 is arranged on the body 61 and internally arranged with a specific circuit configured to control driving of the motor 62 and perform the safety monitoring function on the motor 62, so as to realize the safety control of the mechanical arm 63, and thus it may enable the robot 60 utilizing the mechanical arm 63 to meet the safety requirements proposed according to the safety standard ISO 15066 of the cooperative robot and the safety architecture proposed according to the mechanical safety standard ISO 13849-1.

The above is only some embodiments of the present disclosure, not to limit the scope of the present disclosure. Any equivalent structure or equivalent process transformation made by using the contents of the specification and the accompanying drawings of the present disclosure, or directly or indirectly applied in other related technical fields, are included in the scope of the present disclosure in the same way.

## Claims

1. A control circuit (10) of a mechanical arm (50, 63), **characterized in that**, the mechanical arm (50, 63) comprises the control circuit (10) and a driving mechanism (20) connected to the control circuit (10), wherein the control circuit (10) and the driving mechanism (20) are configured to be arranged on a joint of the mechanical arm (50, 63), and the control circuit (10) comprises:
a first detection circuit (11), configured to be connected to the driving mechanism (20) and configured to obtain first motion information of a high-speed end of the driving mechanism (20);
a second detection circuit (12), configured to be connected to the driving mechanism (20) and configured to obtain second motion information of a low-speed end of the driving mechanism (20);
a driving control circuit (13), configuired to be connected to the first detection circuit (11) and the second detection circuit (12), respectively, and configured to control the driving mechanism (20) to operate based on the first motion information and the second motion information; and
a safety monitoring circuit (14), configured to be connected to the driving control circuit (13) and the second detection circuit (12), respectively, and configured to perform safety monitoring of the low-speed end motion based on the second motion information and to feed back abnormal information to the driving control circuit (13) in response to the motion of the low-speed end being abnormally, wherein the driving control circuit (13) is configured to control the driving mechanism (20) to decelerate or stop operating based on the abnormal information; and
wherein the motion information comprises dynamic information and kinematic information.

2. The control circuit (10) according to claim 1, wherein the second motion information comprises first speed position information and second speed position information; wherein
the safety monitoring circuit (14) comprises:
a first slave control circuit (141), configured to be connected to the second detection circuit (12), and configured to obtain the first speed position information from the second detection circuit (12) and to process the first speed position information;
a second slave control circuit (142), configured to be connected to the driving control circuit (13), the second detection circuit (12), and the first slave control circuit (141), respectively, wherein the second slave control circuit (142) is configured to obtain the second speed position information from the second detection circuit (12), to process the second speed position information, and to perform cross validation on processed second speed position information and processed first speed position information in order to determine whether a rotation speed and a position of the low-speed end are safe, and to feed back the abnormal information to the driving control circuit (13) in response to the rotation speed and/or the position being unsafe.

3. The control circuit (10) according to claim 2, wherein the first motion information comprises first incremental position information, and the second speed position information comprises first absolute position information; the driving control circuit (13) is configured to obtain a rotation speed of the high-speed end based on the first incremental position information, to control a rotation of the high-speed end based on the rotation speed, and control the rotation of the low-speed end; and the driving control circuit (13) is configured to obtain a current position of the low-speed end based on the first absolute position information and to control the joint to reach a target position based on the rotation speed and the current position of the high-speed end.

4. The control circuit (10) according to claim 3, wherein the first slave control circuit (141) is configured to determine a first rotation speed and/or a first position of the low-speed end based on the first speed position information, and the second slave control circuit (142) is configured to determine a second rotation speed and/or a second position of the low-speed end based on the second speed position information;
the second slave control circuit (142) is configured to determine whether a difference between the first rotation speed and the second rotation speed is greater than a first difference threshold, to determine the rotation speed of the low-speed end to be abnormal in response to the difference being greater than the first difference threshold, and to feed back abnormal rotation speed information; and the driving control circuit (13) is configured to control the driving mechanism (20) to stop operating based on the abnormal rotation speed information;
the second slave control circuit (142) is configured to determine whether the first rotation speed is greater than a rotation speed threshold, to determine the motion of the low-speed end to be overspeed in response to the first rotation speed being greater than the rotation speed threshold, and to feed back overspeed information, and the driving control circuit (13) is configured to control the driving mechanism (20) to decelerate based on the overspeed information; and/or
the second slave control circuit (142) is configured to determine whether a difference between the first position and the second position is greater than a second difference threshold, to determine the position of the low-speed end to be abnormal in response to the difference between the first position and the second position being greater than the second difference threshold, and to feed back abnormal position information, and the driving control circuit (13) is configured to control the driving mechanism (20) to stop operating based on the abnormal position information; and
in response to the difference between the first position and the second position being less than or equal to the second difference threshold, the second slave control circuit (142) is further configured to determine whether the first position is greater than a position threshold, to determine the position of the low-speed end to be overrun in response to the first position being greater than the position threshold, and to feed back position overrunning information, and the driving control circuit (13) is configured to control the driving mechanism (20) to stop operating based on the position overrunning information.

5. The control circuit (10) according to claim 4, wherein the first speed position information comprises second incremental position information, and the second speed position information comprises third incremental position information;
the first slave control circuit (141) is configured to determine the first rotation speed of the low-speed end based on the second incremental position information, and the second slave control circuit (142) is configured to determine the second rotation speed of the low-speed end based on the third incremental position information;
the first speed position information comprises second absolute position information, and the second speed position information comprises first absolute position information;
the first slave control circuit (141) is configured to determine the first position of the low-speed end based on the second absolute position information, and the second slave control circuit (142) is configured to determine the second position of the low-speed end based on the first absolute position information.

6. The control circuit (10) according to claim 2, wherein the first motion information comprises first incremental position information and third absolute position information, the second slave control circuit (142) is configured to be further connected to the first detection circuit (11), and the second slave control circuit (142) is configured to determine the rotation speed of the low-speed end based on the first incremental position information and a reduction ratio between the high-speed end and the low-speed end; or
the second slave control circuit (142) is configured to determine the rotation speed of the low-speed end based on the third absolute position information and the reduction ratio; or
the first speed position information comprises second absolute position information, and the first slave control circuit (141) is configured to determine the rotation speed of the low-speed end based on the second absolute position information.

7. The control circuit (10) according to claim 2, wherein the first detection circuit (11) comprises:
a first encoder (111), configured to be disposed opposite to the high-speed end and connected to the driving control circuit (13), and configured to obtain the first motion information.

8. The control circuit (10) according to claim 7, wherein the second detection circuit (12) comprises:
a second encoder (121), configured to be disposed opposite to the low-speed end and connected to the first slave control circuit (141), and configured to obtain the first speed position information; and
a third encoder (122), configured to be disposed opposite to the low-speed end and connected to the second slave control circuit (142), and configured to obtain the second speed position information.

9. The control circuit (10) according to claim 8, wherein the second detection circuit (12) further comprises:
a fourth encoder (123), configured to be disposed opposite to the low-speed end and connected to the driving control circuit (13), and configured to obtain the third speed position information.

10. The control circuit (10) according to claim 9, wherein the first motion information comprises third absolute position information, the first speed position information comprises second absolute position information, the second speed position information comprises first absolute position information, and the third speed position information comprises fourth absolute position information; and
the driving control circuit (13) is configured to control the driving mechanism (20) to operate based on the fourth absolute position information and the third absolute position information;
the second slave control circuit (142) is configured to perform cross validation based on the first absolute position information and the second absolute position information in oder to determine whether the rotation speed and the position of the low-speed end are safe, and to feed back the abnormal information to the driving control circuit (13) in response to the rotation speed and/or the position of the low-speed end being unsafe.

11. The control circuit (10) according to claim 1, wherein the second motion information comprises incremental position information and absolute position information, the safety monitoring circuit (14) is configured to obtain a first rotation speed or a first position of the low-speed end based on the incremental position information and to obtain a second rotation speed or a second position of the low-speed end based on the absolute position information;
the safety monitoring circuit (14) is configured to determine whether a difference between the first rotation speed and the second rotation speed is greater than a first difference threshold, and to determine a rotation speed of the low-speed end to be abnormal in response to the difference between the first rotation speed and the second rotation speed being greater than the first difference threshold; and
the safety monitoring circuit (14) is configured to determine whether a difference between the first position and the second position is greater than a second difference threshold, and to determine a position of the low-speed end to be abnormal in response to a difference between the first position and the second position being greater than the second difference threshold.

12. The control circuit (10) according to claim 1, wherein the driving control circuit (13) is configured to determine whether the first motion information and the second motion information meet a preset ratio in order to determine whether the driving mechanism (20) operates abnormally, and to control the driving mechanism (20) to decelerate or stop operating in response to a determination that the driving mechanism operates abnormally.

13. The control circuit (10) according to claim 1, wherein the first motion information comprises third absolute position information and first incremental position information;
the driving control circuit (13) is configured to determine an initial position of the high-speed end based on the third absolute position information corresponding to the startup moment and to determine a position of the high-speed end after startup based on the initial position and the corresponding first incremental position information after startup.

14. The control circuit (10) according to claim 1, wherein the first detection circuit (11) comprises:
a first encoder (111), configured to be disposed opposite to the high-speed end and connected to the driving control circuit (13), and configured to obtain the first motion information; and
wherein the second detection circuit (12) comprises:
a second encoder (121), configured to be disposed opposite to the low-speed end and connected to the driving control circuit (13), and configured to obtain first speed position information.

15. The control circuit (10) according to claim 14, wherein the first motion information comprises first incremental position information, the first speed position information comprises second absolute position information, the driving control circuit (13) is configured to obtain a rotation speed of the high-speed end based on the first incremental position information, to control the rotation speed of the high-speed end based on the rotation speed of the high-speed end in order to control the rotation speed of the low-speed end; and
wherein the driving control circuit (13) is configured to obtain a current position of the low-speed end based on the second absolute position information, and to control the joint to reach a target position based on the rotation speed and the current position of the low-speed end.

16. The control circuit (10) according to claim 15, wherein the safety monitoring circuit (14) comprises:
a first slave control circuit (141), configured to be connected to the second encoder (121), and configured to obtain the first speed position information and to process the first speed position information;
a second slave control circuit (142), configured to be connected to the driving control circuit (13), the first encoder (111) and the first slave control circuit (141), respectively, wherein the second slave control circuit (142) is configured to process the first motion information and to perform cross validation on processed first motion information and processed first speed position information in order to determine whether the rotation speed and the position of the low-speed end are safe, and to feed back abnormal information to the driving control circuit (13) in response to the rotation speed and/or the position of the low-speed end being unsafe.

17. The control circuit (10) according to claim 14, wherein the first speed position information comprises second incremental position information, the first slave control circuit (141) is configured to be further connected to the driving control circuit (13) and is configured to transmit the second incremental position information to the driving control circuit (13);
the driving control circuit (13) is configured to compare the third absolute position information with the second incremental position information in order to determine whether the first slave control circuit (141) is abnormal, and to control the driving mechanism (20) to stop operating or report an error in response to a determination that the first slave control circuit is abnormal.

18. A mechanical arm (50, 63), comprising the control circuit (10) according to any one of claims 1-17.

19. A robot (60), **characterized by** comprising:
a body (61);
a motor (62), configured to be arranged in the body and configured to drive the body (61) to move; and
the mechanical arm (50, 63) according to claim 18, configured to be arranged on the body (61) and configured to perform operations.
